# EUROPEAN PATENT SPECIFICATION

(11) **EP 0 876 939 B1**
(45) Date of publication and mention of the grant of the patent: **14.11.2001**
(21) Application number: 98201425.0
(22) Date of filing: 04.05.1998
(51) Int. Cl.: B60P 1/18

(54) **Tipping trailer and tipping mechanism for trailers**
Kippanhänger und Kippvorrichtung für Anhänger
Remorque basculante et mécanisme de basculement pour remorques

(30) Priority: 05.05.1997 BE 9700401; 22.08.1997 BE 9700696
(43) Date of publication of application: 11.11.1998
(73) Proprietor: Atcomex Company N.V., 8560 Gullegem (BE)
(72) Inventor: Neirinck, Eric, 8760 Meulebeke (BE)
(74) Representative: Leherte, Georges M.L.M., Dr.

(56) References cited:
- EP-A- 0 062 502
- US-A- 4 954 039
- US-A- 5 454 620

## Description

This invention relates to a tipping mechanism for an individual trailer-construction according to the characteristics of the preamble of independent claim 1 and to trailers with a tipping mechanism according to the characteristics of the preamble of independent claim 8. . In particular the invention relates to tipping trailers or semi-trailers for road transport, such as for trucks, tractors, airport machines, farming macchines, etc..

Trucks and trailers with a so-called tipping or dumping receptacle are well known in the art.
These known vehicles have however in general a quite heavy construction, due to the supporting frame or frames (often two frames are used) of the tipping receptacle and/or of the vehicle/trailer itself, and due to the complex and/or heavy lifting mechanisms involved.

In order to reduce the weight of the construction and simplify the system, many proposals have been made untill now, involving a separately tilting trailer with a reduced or simplified frame, and a lifting mechanism acting from the trailer tractor or truck to tilt or tip the. trailer.

Thus US Patent 3.788.702 discloses a system consisting of two units, one of which is a large drop frame trailer, and a modified tractor on which is mounted a hydraulic operated hoist to lift the trailer via the so-called "fifth wheel", i.e. the towing means of the tractor.

German Gebrauchsmuster G 82 03 952.6 describes a tractor and tank-trailer combination comprising hydraulic lifting means between the towing means of the tractor and the trailer.

European patent application EP 0 062 502 relates to a tipping trailer connected to a tractor by means of a "fifth wheel". The tractor / trailer combination involves a tipping mechenism with hoisting means connected to the tractor, on the one hand, and to the front end of the trailer, on the other hand, and with a winch with a flexible line from the tractor to the rear end of the trailer.

US patent 4.954.039 concerns a dump tailer including a movable frame for receiving a container and a telescopic hoist interposed between the frame and the "fifth wheel" of the tractor to pivot the frame, whereas a draft arm extends between the "fifth wheel" and the frame to guide the movement.

US patent 5.454.620 which is considered to represent one example of the closest prior art according to the characteristics of the preambles of independent claims 1 and 8, discloses a "ultralight" vessel for trailers comprising support and/or reinforcing members, whereas said trailer can be elevated by a hydraulic cilinder supported on one end by the "fifth wheel" of a tractor and on the other end connected to the top of the trailer, whereas draft arms are provided between said "fifth wheel" and the trailer.

These known devices however still do not satisfactorilly meet the current requirements, in respect of weight, simplicity of construction and ease of handling, put to tipping trailers used for modern road transport.

The present invention aims at meeting those requirements by proposing a tipping mechanism for an individual trailer-construction with a self-supporting receptacle, comprising hoisting means acting on said receptacle to allow elevation of one end of said receptacle, in which said tipping mechanism further comprises :
front support means co-operating with said hoisting means to allow elevation of one end of said receptacle,
rear support means provided to said receptacle, adapted to support the opposite end of said receptacle when being tipped, and
at least one connection means between said front support means and said rear support means,
said hoisting means, said front support means, said rear support means and said connection means, of said tipping mechanism, all being part of said individual trailer construction with a self-supporting receptacle, so that said trailer construction is capable of being tipped separately when the tipping trailer is disconnected from the tractor.

The expressions "front" and "rear" as used hereabove define that end of the receptacle which can be elevated as being as the "front", whereas the opposite end is referred to as the rear.
In general and/or in principle this will also correspond to the "front" and "rear" of the trailer when in movement, but the invention should not be restricted to this classic definition of "front" and "rear" with respect to the conventional moving direction of a trailer.

According to the invention, the tipping receptacle may for instance consist of
- a tipping tank, in any cross section and length;
- a tipping open-top vessel, box or receptacle, in any cross section and length;
- a tipping "container support" frame, in various lenghts;
- etc.

Also according to the invention, the hoisting means of the tipping mechanism may in particular comprise mechanical, hydromechanical or hydraulic hoists.

According to a preferred embodiment of the invention, the hoisting means of the tipping mechanism may in particular comprise at least one hydraulic cylinder connected to each lateral side of said self-supporting receptacle through a connecting piece.
In this embodiment of the invention a cross beam may suitably be provided between said hydraulic cylinders, and said front support means may suitably comprise mechanically , or hydraulically extendable supports connected to said cross beam.

According to a further preferred embodiment of the invention the rear support means of the tipping mechanism may in particular comprise mechanically or hydraulically extendable supports hinged and/or connected near said opposite end of said receptacle.

In accordance with a further feature of the invention, the connection means between the front support means and the rear support means of the tipping mechanism, preferrably comprise at least one connecting beam between at least one front support and the rear support means.

According to a very specific embodiment of the invention, the connection means between the front support means and the rear support means of the tipping mechanism most suitably comprise two connecting beams, each connecting one mechanically or hydraulically extendable support provided at opposite sides of a cross beam as referred to above, to a shaft of the rear support means, which shaft is provided close to mechanically or hydraulically extendable supports of the rear support means as referred to above, near the end of the receptacle opposite to the end which can be elevated.

The invention also relates to tipping trailers adapted for attachment to tractors, as an individual trailer-construction with a self-supporting receptacle, comprising hoisting means acting on said receptacle to allow elevation of one end of said receptacle, which further comprises :
front support means co-operating with said hoisting means to allow elevation of one end of said receptacle,
rear support means provided to said receptacle, adapted to support the opposite end of said receptacle when being tipped, and
at least one connection means between said front support means and said rear support means,
said hoisting means, said front support means, said rear support means and said connection means of said tipping mechanism, all being part of said trailer, so that said trailer is capable of being tipped separately.

In particular the invention specifically relates to such tipping trailers equipped with a tipping mechanism as described hereabove.

Further features and specific aspects of the invention, as well as the use thereof, will become apparent from the following description of one specific embodiment of the invention, explaining the invention in full detail with reference to the attached drawings representing that embodiment.

In the attached drawings :

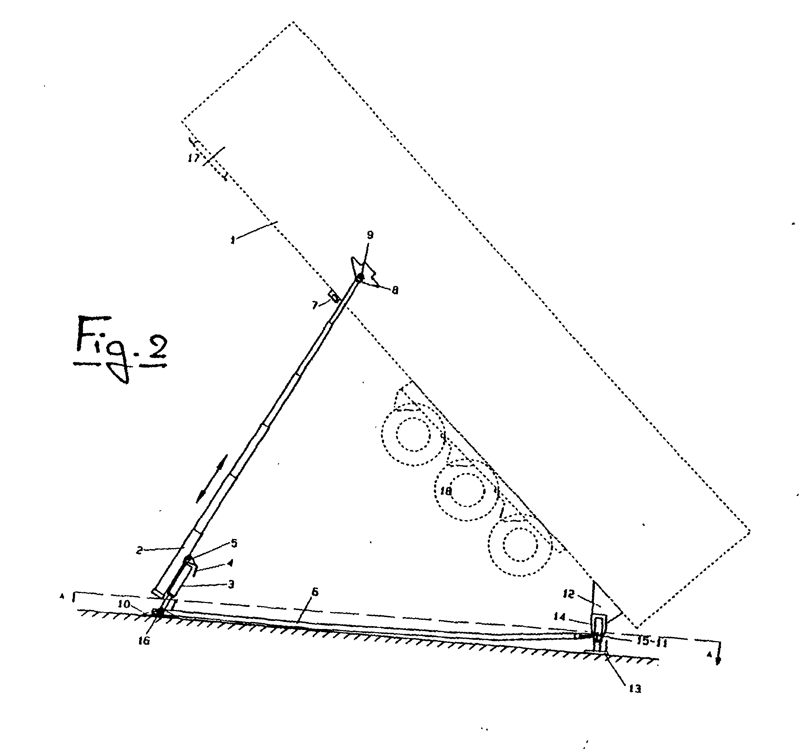

**Figures 1 and 2** are side views of a tipping trailer construction according to the invention, both in lowered position (figure 1) and in tipped position (figure 2);
**Figure 3** is a front view of the tipping trailer construction of figure 1;
**Figure 4** is a rear view of the tipping trailer construction of figure 1;

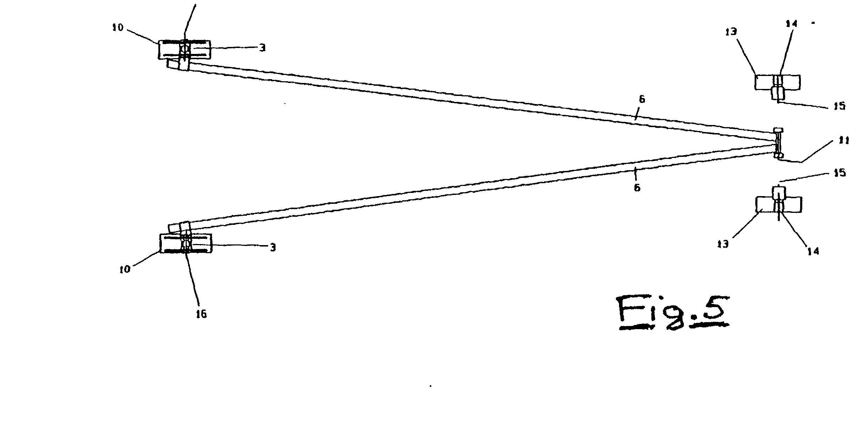

**Figure 5** is a sectionnal view of the tipping trailer construction according to plane A - A of figure 2.

The figures show a tipping trailer construction with a self-supporting tipping receptacle indicated with reference numeral (1) ; the tipping receptacle is only represented shematically as it may consist of any type of tipping receptacle such as a tipping tank, a tipping open-top vessel, a tipping "container support" frame, etc.

A pair of cylinders (2) with an hydraulic in- and out-going movement, which can be actuated electrically, manually or pneumatically, are connected to connecting pieces (8) on each side of the self-supporting receptacle (1), via a hinging points (9) at the top of the cylinders (2). The connecting pieces (8) can be welded, bolted or rivetted to the receptacle (1) or attached to it by means of quick-fasteners.

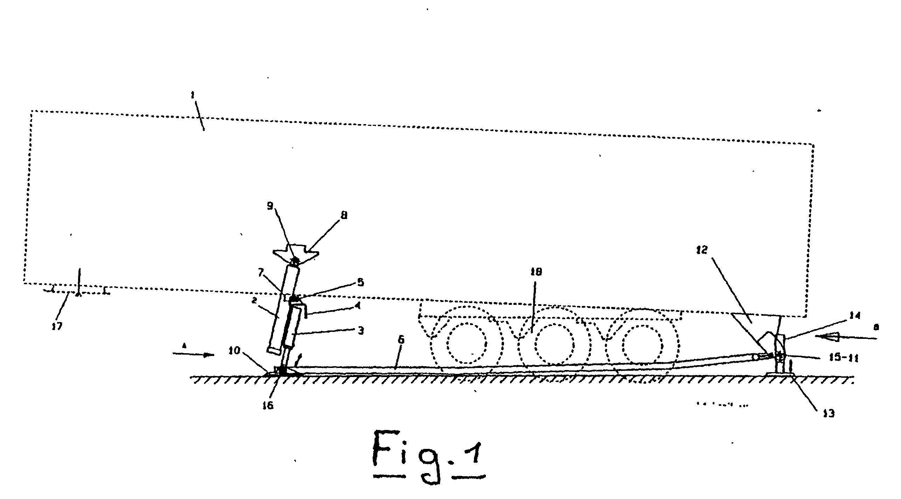

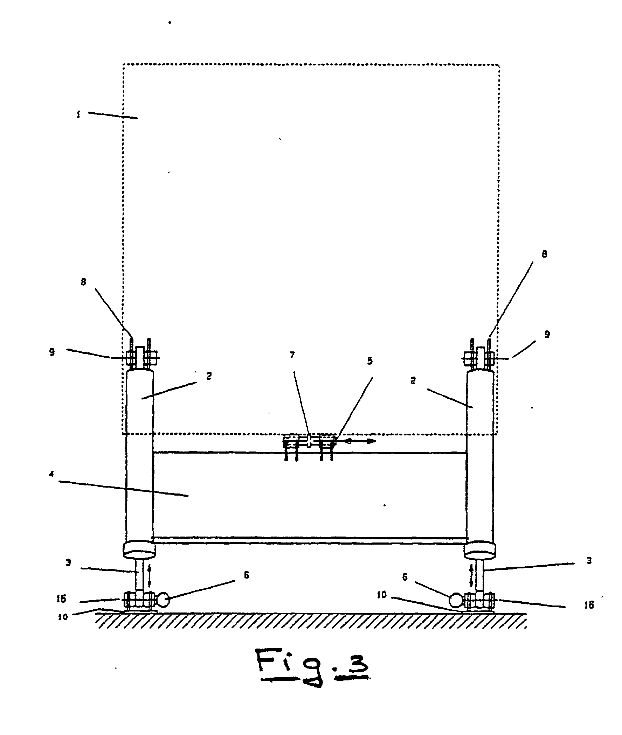

As shown more clearly on figure 3 (front view according to arrow A of figure 1), a cross beam or member (4) having any thinkable cross-section, is provided between both cylinders (2); the hydraulic cylinders (2) are bolted to the cross beam (4); two front supports (3), having mechanically or hydraulicly extendable legs with articulated support plates (10), are connected to said cross beam (4) by means of bolts or the like.
The mechanical or hydraulic front supports (3) can be operated electrically, manually or pneumatically.

A locking mechanism (5),(7), realised as a single lock or as a double lock, comprises a single or double latch-hole member (7) attached to the bottom of the receptacle (1), and a single or double latch (5) with an electrically, manually or pneumatically operated in- and out-going movement, attached to the cross beam (4). The latch-hole member(s) (7) are welded or bolted to the receptacle.

Two connecting beams (6), having any cross section, are, at one of their ends, connected through hinges (16) to the "legs" - the articulated support plates (10) - of the supports (3), and, at their other ends, to a hinged shaft (11) attached to the rear support mechanism designated as a whole with reference numeral (12).
The connecting beams (6) allow to maintain the cross beam (4) in constant position with respect to the rear support mechanism (12). The connecting beams can furthermore serve as conduct for pipes (such as for compressor air), cables and/or wires.

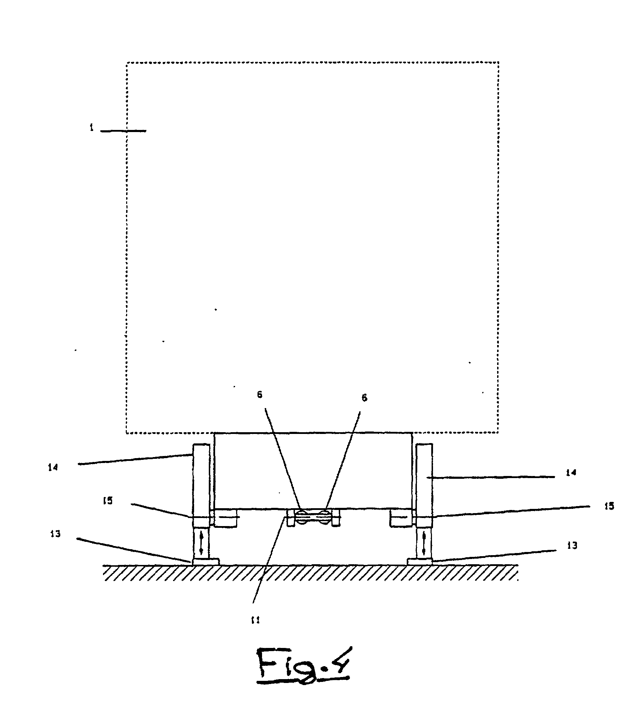

As shown more clearly on figure 4 (rear view according to arrow B of figure 1), the rear support mechanism (12), comprises two rear supports (14) having mechanically or hydraulicly extendable legs with fixed support plates (13), the movement of which can be actuated electrically, manually or pneumatically. The mechanical or hydraulic rear supports (14) are hingedly connected to the support mechanism by means of hinging points (15). The rear support mechanism as a whole can be bolted, welded or rivetted to the receptacle (1) or attached thereto by means of quick fasteners. The fixed support plates (13) ar bolted or welded to the hinged rear supports (14).

A connecting member (17) for the towing means of a tractor ("fifth wheel") is attached to the front end of the self-supporting receptacle, and a set of axles and wheels (18), with 1 - 2 or 3 axles is attached to the rear end of the self-supporting receptacle.
The self-supporting trailer can be moved thanks to this connecting member (17) and this set of wheels (18), by connecting it to a tractor.
When the trailer is due to move the locking mechanism (5) is shifted into the latch-eye (7) and the front supports (3) and rear supports (14) are withdrawn.

When the tipping trailer is disconnected from the tractor and/or due to be tipped by extending the hydraulic cylinders (the tipping receptacle can be hoisted to a highest inclination corresponding to the total stroke length of the cylinders), the front supports 3 are opperated to put the cross beam and the entire receptacle (1) in substantially horizontal position.

## Claims

1. Tipping mechanism for an individual trailer-construction with a self-supporting receptacle (1), comprising hoisting means (2) acting on said receptacle (1) to allow elevation of one end of said receptacle (1), **characterised in that** said tipping mechanism further comprises :
front support means (3) co-operating with said hoisting means (2) to allow elevation of one end of said receptacle (1),
rear support means (12) provided to said receptacle (1), adapted to support the opposite end of said receptacle (1) when being tipped, and
connection means (6) between said front support means (3) and said rear support means (12),
said hoisting means (2), said front support means (3), said rear support means (12) and said connection means (6), of said tipping mechanism, all being part of said individual trailer construction with a self-supporting receptacle (1), so that said trailer construction is capable of being tipped separately when the tipping trailes is disconnected from the tractor.

2. Tipping mechanism according to claim 1, **characterised in that** the hoisting means (2) comprise mechanical, hydromechanical or hydraulic hoists.

3. Tipping mechanism according to claim 1, **characterised in that** the hoisting means (2) comprise at least one hydraulic cylinder (2) connected to each lateral side of said self-supporting receptacle through a connecting piece (8).

4. Tipping mechanism according to claim 3, **characterised in that** a cross beam (4) is provided between said hydraulic cylinders (2) and **in that** said front support means (3) comprise mechanically or hydraulically extendable supports (3) connected to said cross beam (4).

5. Tipping mechanism according to any one of the preceeding claims, **characterised in that** said rear support means (12) comprises mechanically or hydraulically extendable supports (14) hinged and/or connected near said opposite end of said receptacle (1).

6. Tipping mechanism according to any one of the preceeding claims, **characterised in that** said connection means (6) between said front support means (3) and said rear support means (12) comprise at least one connecting beam (6) between at least one front support (3) and the rear support means (12).

7. Tipping mechanism according to claims 4 and 5,
**characterised in that** said connection means (6) between said front support means (3) and said rear support means (12) comprise two connecting beams (6), each connecting one mechanically or hydraulically extendable support (3) provided at opposite sides of said cross beam (4), to a shaft (11) of said rear support means (12), provided close to said mechanically or hydraulically extendable supports (14) of said support means (12), near said opposite end of said receptacle (1).

8. Tipping trailer adapted for attachment to a tractor, as an individual trailer-construction with a self-supporting receptacle (1), comprising hoisting means (2) acting on said receptacle (1) to allow elevation of one end of said receptacle (1), **characterised in that** said tipping trailer further comprises :
front support means (3) co-operating with said hoisting means (2) to allow elevation of one end of said receptacle (1),
rear support means (12) provided to said receptacle (1), adapted to support the opposite end of said receptacle (1) when being tipped, and
at least one connection means (6) between said front support means (3) and said rear support means (12),
said hoisting means (2), said front support means (3), said rear support means (12) and said connection means (6), of said tipping mechanism, all being part of said trailer, so that said trailer is capable of being tipped separately when the tipping trailer is disconnected from the tractor.

9. Tipping trailer according to claim 8, charactericed in that said trailer comprises a tipping mechanism according to any one of claims 2 to 7.

## Patentansprüche

1. Kippmechanik für einen einzelnen Anhängeraufbau mit selbsttragendem Laderaum (1), welche eine Hebeeinrichtung (2) aufweist, die auf den Laderaum (1) so einwirkt, dass sie ein Anheben eines Endes des Laderaums (1) ermöglicht, **dadurch gekennzeichnet, dass** die Kippmechanik des weiteren folgendes aufweist:
eine vordere Abstützeinrichtung (3), die mit der Hebeeinrichtung (2) so zusammenwirkt, dass sie ein Anheben eines Endes des Laderaums (1) ermöglicht,
eine hintere Abstützeinrichtung (12), die an dem Laderaum (1) vorgesehen und so ausgelegt ist, dass sie das gegenüberliegende Ende des Laderaums (1) in gekippter Stellung abstützt, und
eine Verbindungseinrichtung (6) zwischen der vorderen Abstützeinrichtung (3) und der hinteren Abstützeinrichtung (12),
wobei die Hebeeinrichtung (2), die vordere Abstützeinrichtung (3), die hintere Abstützeinrichtung (12) und die Verbindungseinrichtung (6) der Kippmechanik alle Teil des einzelnen Anhängeraufbaus mit selbsttragendem Laderaum (1) sind, so dass der Anhängeraufbau separat kippbar ist, wenn der Kippanhänger vom Zugfahrzeug abgekoppelt ist.

2. Kippmechanik nach Anspruch 1, **dadurch gekennzeichnet, dass** die Hebeeinrichtung (2) mechanische, hydromechanische oder hydraulische Winden aufweist.

3. Kippmechanik nach Anspruch 1, **dadurch gekennzeichnet, dass** die Hebeeinrichtung (2) mindestens einen Hydraulikzylinder (2) aufweist, der mit jeder Seitenfläche des selbsttragenden Laderaums über ein Verbindungsstück (8) verbunden ist.

4. Kippmechanik nach Anspruch 3, **dadurch gekennzeichnet, dass** zwischen den Hydraulikzylindern (2) ein Querträger (4) vorgesehen ist, und dass die vordere Abstützeinrichtung (3) mechanisch oder hydraulisch ausfahrbare Stützen (3) aufweiset, die mit dem Querträger (4) verbunden sind.

5. Kippmechanik nach einem der vorhergehenden Ansprüche, **dadurch gekennzeichnet, dass** die hintere Abstützeinrichtung (12) mechanisch oder hydraulisch ausfahrbare Stützen (14) aufweist, die nahe dem gegenüberliegenden Ende des Laderaums (1) angelenkt und/oder verbunden sind.

6. Kippmechanik nach einem der vorhergehenden Ansprüche, **dadurch gekennzeichnet, dass** die Verbindungseinrichtung (6) zwischen der vorderen Abstützeinrichtung (3) und der hinteren Abstützeinrichtung (12) mindestens einen Verbindungsträger (6) zumindest zwischen einer vorderen Stütze (3) und der hinteren Abstützeinrichtung (12) aufweist.

7. Kippmechanik nach den Ansprüchen 4 und 5, **dadurch gekennzeichnet, dass** die Verbindungseinrichtung (6) zwischen der vorderen Abstützeinrichtung (3) und der hinteren Abstützeinrichtung (12) zwei Verbindungsträger (6) aufweist, die jeweils eine mechanisch oder hydraulisch ausfahrbare Stütze (3), die an gegenüberliegenden Seiten des Querträgers (4) vorgesehen ist, mit einer Welle (11) der hinteren Abstützeinrichtung (12) verbindet, die nahe den mechanisch oder hydraulisch ausfahrbaren Stützen (14) der Abstützeinrichtung (12) nahe dem gegenüberliegenden Ende des Laderaums (1) vorgesehen ist.

8. Kippanhänger zur Ankopplung an ein Zugfahrzeug als einzelner Anhängeraufbau mit selbsttragendem Laderaum (1), welcher eine Hebeeinrichtung (2) aufweist, die auf einen Laderaum (1) so einwirkt, dass sie das Anheben eines Endes des Laderaums (1) ermöglicht, **dadurch gekennzeichnet, dass** der Kippanhänger des weiteren folgendes aufweist:
eine vordere Abstützeinrichtung (3), die mit der Hebeeinrichtung (2) so zusammenwirkt, dass sie ein Anheben eines Endes des Laderaums (1) ermöglicht,
eine hintere Abstützeinrichtung (12), die an dem Laderaum (1) vorgesehen und so ausgelegt ist, dass sie das gegenüberliegende Ende des Laderaums (1) in gekippter Stellung abstützt, und
eine Verbindungseinrichtung (6) zwischen der vorderen Abstützeinrichtung (3) und der hinteren Abstützeinrichtung (12),
wobei die Hebeeinrichtung (2), die vordere Abstützeinrichtung (3), die hintere Abstützeinrichtung (12) und die Verbindungseinrichtung (6) der Kippmechanik alle Teil des einzelnen Anhängeraufbaus mit selbsttragendem Laderaum (1) sind, so dass der Anhänger separat kippbar ist, wenn der Kippanhänger vom Zugfahrzeug abgekoppelt ist.

9. Kippanhänger nach Anspruch 8, **dadurch gekennzeichnet, dass** der Anhänger eine Kippmechanik nach einem der Ansprüche 2 bis 7 aufweist.

## Revendications

1. Mécanisme à bascule pour une remorque individuelle avec un réceptacle autoporteur (1), comprenant un moyen de levage (2), agissant sur le réceptacle (1) pour permettre une élévation de l'une des extrémités du réceptacle (1), **caractérisé en ce que** le mécanisme à bascule comprend en outre :
un dispositif avant de support (3) agissant en coopération avec le moyen de levage (2) pour permettre l'élévation de l'une des extrémités du réceptacle (1) ;
un dispositif arrière de support (12) inséré sur le réceptacle (1), destiné à supporter l'extrémité opposée du réceptacle (1) lorsqu'il est basculé, et
un moyen de connexion (6) entre le dispositif avant de support (3) et le dispositif arrière de support (12),
le moyen de levage (2), le dispositif avant de support (3), le dispositif arrière de support (12) et le moyen de connexion (6) du mécanisme à bascule, faisant tous partie de la remorque individuelle à réceptacle autoporteur (1) de sorte que la remorque puisse être basculée même lorsque la remorque à bascule est déconnectée du tracteur.

2. Mécanisme à bascule suivant la revendication 1, **caractérisé en ce que** le moyen de levage (2) comprend des agents mécaniques, hydromécaniques ou hydrauliques de levage.

3. Mécanisme à bascule suivant la revendication 1, **caractérisé en ce que** le moyen de levage (2) comprend au moins un cylindre hydraulique (2) connecté à chaque face latérale du réceptacle autoporteur par une pièce de connexion (8).

4. Mécanisme à bascule suivant la revendication 3, **caractérisé en ce que** l'on dispose une traverse (4) entre les cylindres hydrauliques (2) et **en ce que** le dispositif avant de support (3) comprend des supports extensibles (3) mécaniques ou hydrauliques, connectés à la traverse (4).

5. Mécanisme à bascule suivant l'une quelconque des revendications précédentes, **caractérisé en ce que** le dispositif avant de support (12) comprend des supports extensibles (14) mécaniques ou hydrauliques à charnière et/ou connectés près de l'extrémité opposée du réceptacle (1).

6. Mécanisme à bascule suivant l'une quelconque des revendications précédentes, **caractérisé en ce que** le moyen de connexion (6) entre le dispositif avant de support (3) et le dispositif arrière de support (12) comprend au moins une traverse de connexion (6) entre au moins un support avant (3) et le dispositif arrière de support (12).

7. Mécanisme à bascule suivant les revendications 4 et 5, **caractérisé en ce que** le moyen de connexion (6) entre le dispositif avant de support (3) et le dispositif arrière de support (12) comprend deux traverses de connexion (6), chacun connectant un support extensible (3) mécanique ou hydraulique, disposé sur les faces opposées de la traverse (4), à un arbre (11) du dispositif arrière de support (12), disposé à proximité des supports extensibles (14) mécaniques ou hydrauliques du dispositif de support (12), près des extrémités opposées du réceptacle (1).

8. Remorque à bascule destinée à être fixée à un tracteur, en tant que remorque individuelle avec un réceptacle autoporteur (1), comprenant un moyen de levage (2), agissant sur le réceptacle (1) pour permettre une élévation de l'une des extrémités du réceptacle (1), **caractérisé en ce que** la remorque à bascule comprend en outre :
un dispositif avant de support (3) agissant en coopération avec le moyen de levage (2) pour permettre l'élévation de l'une des extrémités du réceptacle (1) ;
un dispositif arrière de support (12) inséré sur le réceptacle (1), destiné à supporter l'extrémité opposée du réceptacle (1) lorsqu'il est basculé, et
au moins un moyen de connexion (6) entre le dispositif avant de support (3) et le dispositif arrière de support (12),
le moyen de levage (2), le dispositif avant de support (3), le dispositif arrière de support (12) et le moyen de connexion (6) du mécanisme à bascule, faisant tous partie de la remorque de sorte que la remorque puisse être basculée même lorsque la remorque à bascule est déconnectée du tracteur.

9. Remorque à bascule suivant la revendication 8, **caractérisé en ce que** la remorque comprend un mécanisme à bascule suivant l'une quelconque des revendications 2 à 7.
